## Europäisches Patentamt

(19) **European Patent Office**

**Office européen des brevets**

(11) Veröffentlichungsnummer: **0 106 383**
**B1**

(12) # EUROPÄISCHE PATENTSCHRIFT

(45) Veröffentlichungstag der Patentschrift:
**10.12.86**

(51) Int. Cl.⁴: **H 02 K 5/24, F 16 D 3/58**

(21) Anmeldenummer: **83201307.2**

(22) Anmeldetag: **13.09.83**

(54) **Elektromotor.**

(30) Priorität: **15.09.82 AT 3460/82**

(43) Veröffentlichungstag der Anmeldung:
**25.04.84 Patentblatt 84/17**

(45) Bekanntmachung des Hinweises auf die Patenterteilung:
**10.12.86 Patentblatt 86/50**

(84) Benannte Vertragsstaaten:
**DE FR GB IT NL SE**

(56) Entgegenhaltungen:
**DE - A - 1 538 933**
**DE - C - 253 285**
**FR - A - 2 499 326**
**GB - A - 1 216 439**
**US - A - 1 543 849**
**US - A - 2 385 369**
**US - A - 3 226 579**

(73) Patentinhaber: **N.V. Philips' Gloeilampenfabrieken,
Groenewoudseweg 1, NL-5621 BA Eindhoven (NL)**

(72) Erfinder: **Smetana, Roland, INT. OCTROOIBUREAU B.V.
Prof. Holstlaan 6, NL-5656 AA Eindhoven (NL)**

(74) Vertreter: **Gorter, Willem Karel et al, INTERNATIONAAL
OCTROOIBUREAU B.V. Prof. Holstlaan 6, NL-5656 AA
Eindhoven (NL)**

ACTORUM AG

## Beschreibung

Die Erfindung betrifft einen Elektromotor mit einem von der Motorwelle freigestellten Läufer, der mittels mindestens zweier im wesentlichen radial und axial verlaufender, elastischer Rippen mit mindestens einer auf der Motorwelle sitzenden Nabe verbunden ist. Ein derartiger Motor ist beispielsweise aus der DE-PS 25 32 85 bekannt. Bei diesem bekannten Motor erfolgt die Verbindung des hohlzylindrisch ausgebildeten Läufers mit der innerhalb des Läufers liegenden Nabe über vier federnd ausgebildete Läuferarme, die einerseits mit der Nabe, anderseits mit dem Läufer fest verbunden sind. Die Läuferarme dienen zur Zentrierung des Läufers und zur Abfangung der Drehmomentstösse.

Die Erfindung hat sich zur Aufgabe gestellt, bei einem Motor der eingangs angeführten Gattung eine weitestgehende schwingungsmässige Entkopplung zwischen dem Läufer an sich und der Motorwelle zu erreichen, wobei auch noch der Einfluss der mit der Motorwelle in Verbindung stehenden Last mit berücksichtigt werden kann. Gemäss der Erfindung ist hierzu vorgesehen, dass die Nabe in axialer Richtung mit Abstand neben dem Läufer liegt und die eine Federung bewirkenden Rippen den Läufer mit der Nabe in axialer Richtung verbinden. Auf diese Weise wird im gesamten mechanischen Schwingungssystem, bestehend aus dem Läufer an sich und der Motorwelle mit den an ihre angeordneten anzutreibenden Teilen, nämlich der Last und gegebenenfalls einem Läufer eines zur Bildung eines Servosystems für die Motorregelung vorgesehenen Tachogenerators, eine weitestgehende Entkopplung des Läufers vom übrigen Schwingungssystem erreicht. Derart angeordnete, eine Federung bewirkende Rippen sind hinsichtlich ihrer schwingungstechnischen Eigenschaften besonders günstig zu dimensionieren, wodurch in besonders einfacher Weise der Frequenzgang des gesamten Schwingungssystems dahingehend beeinflusst werden kann, dass keine Störungen oder Instabilitäten im System auftreten und Schwenkungen im Lauf der Motorwelle im hohen Grade vermieden werden.

Es wird erwähnt, dass aus der französischen Patentanmeldung FR-A-24 99 326 ein Elektromotor mit einem Läuferkranz bekannt ist, wobei der Läuferkranz mittels elastischer Verbindungselemente mit mehreren auf der Motorwelle sitzenden Naben verbunden ist. Die elastischen Verbindungselemente wie auch die Naben sind innerhalb des Umrisses des Läufers angeordnet, dadurch lässt sich aus diesem bekannten Elektromotor nicht entnehmen, dass es günstig ist um die auf der Motorwelle sitzende Nabe oder Naben in axialer Richtung mit Abstand neben dem Läufer zu legen.

Bei dem Elektromotor gemäss der Erfindung hat sich als besonders vorteilhaft erwiesen, wenn in Umfangsrichtung der Nabe gesehen mindestens zwischen zwei aufeinanderfolgenden Rippen zusätzlich mindestens ein parallel zu den Rippen verlaufender, ebenfalls den Läufer mit der Nabe verbindender Schwingungsabsorber angeordnet ist. Auf diese Weise ist zusätzlich zu den eine Federung bewirkenden Rippen mindestens auch ein eine Dämpfung bewirkender Schwingungsabsorber vorgesehen, wodurch in das Schwingungssystem in an sich bekannter Weise eine Dämpfung eingeführt wird, die eine weitere Stabilisierung des Systems bewirkt. Durch die Anordnung des Schwingungsabsorbers zwischen zwei aufeinanderfolgenden Rippen wird ein sehr kompakter Aufbau erhalten. Ein solcher Schwingungsabsorber kann dabei, wie beispielsweise in der US-PS 3 226 579 angegeben, als Gummipuffer ausgebildet sein.

In konstruktiver Hinsicht hat sich auch als vorteilhaft erwiesen, wenn der Läufer einen Träger aufweist, wobei die Rippen den Träger mit der Nabe verbinden und der Träger, die Rippen und die Nabe einstückig, vorzugsweise aus Kunststoff, ausgebildet sind. Ein derartiger Aufbau ist fertigungstechnisch besonders einfach und damit insbesondere für eine Serienproduktion sehr gut geeignet.

Die Erfindung wird im folgenden anhand der Zeichnungen, in welchen einige Ausführungsbeispiele der Erfindung teilweise schematisiert dargestellt sind, auf die sich jedoch nicht beschränkt sein soll, näher erläutert.

Fig. 1 zeigt in einem axialen Schnitt einen Elektromotor, dessen Läufer, der hier als Scheibenläufer ausgebildet ist, mittels einer Nabe auf der Motorwelle angeordnet ist, wobei die Verbindung zwischen dem Läufer und der Nabe durch zwei Rippen erfolgt, die eine Verbindung in axialer Richtung herstellen;

Fig. 2 zeigt den Läufer des Motors nach Fig. 1 in einem Schnitt nach der Linie II–II in Fig. 1;

Fig. 3 zeigt ebenfalls einen mittels einer Nabe auf der Motorwelle angeordneten Scheibenläufer, bei dem aber die Verbindung zwischen dem Läufer und der Nabe über sechs Rippen erfolgt, wobei zusätzlich zwischen dem Läufer und der Nabe noch drei Schwingungsabsorber vorgesehen sind;

Fig. 4 zeigt den Läufer nach Fig. 3 in einem Schnitt nach der Linie IV–IV in Fig. 3;

Fig. 5 zeigt den Läufer nach Fig. 3 in einem Schnitt nach der Linie V–V in Fig. 3;

Fig. 6 zeigt eine sogenannte Abtasteinheit für ein Aufzeichnungs- und/oder Wiedergabegerät, bei der eine rotierend antreibbare Magnetkopfanordnung zusammen mit einem Scheibenläufermotor und einem Tachogenerator eine Baueinheit bilden;

Fig. 7 zeigt das mechanische Schwingungsmodell für die Abtasteinheit nach Fig. 6;

Fig. 8 zeigt Frequenzgangdiagramme für das mechanische Schwingungsmodell nach Fig. 7.

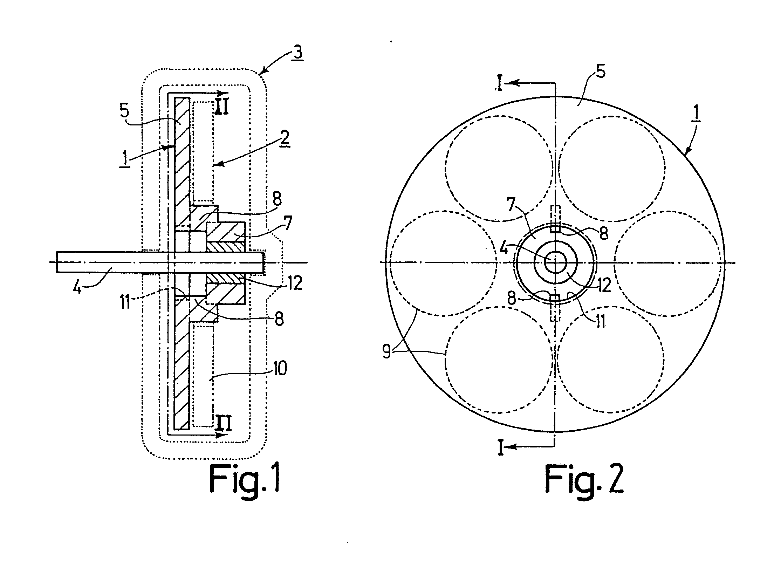

In Fig. 1 sind mit 1 der auch in Fig. 2 dargestellte läufer, mit 2 der Stator und mit 3 das Gehäuse eines Elektromotors bezeichnet. Der Läufer 1 ist auf einer Motorwelle 4 angeordnet, die im Gehäuse 3 drehbar gelagert ist. Beim vorliegenden Ausführungsbeispiel handelt es sich um einen sogenannten Scheibenläufer, dess Läufer 1 einen aus nicht magnetischem Material bestehenden, scheibenförmigen Träger 5 aufweist, in den eine Anzahl von Spulen eingesetzt sind, wie dies in Fig. 2 durch die mit strichlierten Linien eingezeichneten Kreise 9 angedeutet ist. Diesen von einem Kollektor oder einer Steuerschaltung her wechselweise elektrisch erregten Spulen steht als Stator 2 ein Magnetring 10 gegenüber, der in axialer Richtung magnetisiert ist und in Umfangsrichtung gesehen abwechselnd Nord- und Südpole aufweist, wobei das Gehäuse 1 noch als magnetischer Rückschluss herangezogen ist, so dass die Spulen 9 von den Magnetfeldern des Stators in axialer Richtung durchsetzt werden.

Bei solchen Elektromotoren ergibt sich ebenso wie bei Elektromotoren nach anderen Wirkungsprinzipien, das Problem, dass über die den Antrieb bewirkende Erregung des Elektromotors auch unerwünschte Schwingungen der Umfangsgeschwindigkeit des Läufers überlagert werden, die dann von diesem auch auf die Rotation der Motorwelle übertragen werden. Es gibt viele Anwendungen von Elektromotoren, bei welchen derartige Schwankungen im Lauf der Motorwelle nicht erwünscht bzw. nicht zulässig sind. Dies gilt auch für den Fall, dass ein solcher Motor in einen Regelkreis aufgenommen ist, da auch Regelkreise Schwingungen der in Rede stehenden Art nicht vollkommen ausregeln können. Um hier Abhilfe zu schaffen, wurde bereits vorgeschlagen, zwischen den Läufer an sich und seine Antriebsverbindung zur Motorwelle eine Dämpfung bewirkende Schwingungsabsorber vorzusehen. Aber auch eine solche Massnahme hat noch nicht vollständig zufriedenstellende Ergebnisse erbracht. Es hat sich nun gezeigt, dass in dieser Hinsicht sehr zufriedenstellende Ergebnisse dann erhalten werden, wenn der Läufer an sich schwingungstechnisch federnd an die Motorwelle angekoppelt wird, wodurch eine Entkopplung innerhalb des einerseits aus dem Läufer und andererseits aus der Motorwelle und der von dieser angetriebenen Last bestehenden Schwingungssystem erfolgt. Erreicht wird dies dadurch, dass der Läufer an sich von der Motorwelle vollkommen freigestellt und nur mittels elastischer Verbindungselemente mit mindestens einer auf der Motorwelle sitzenden Nabe verbunden wird, wobei die elastischen Verbindungselemente als im wesentlichen radial und axial verlaufende, eine Federung bewirkende Rippen ausgebildet sind. Auf diese Weise werden Schwankungen im Laufe der Motorwelle in hohem Grade vermieden und wird insgesamt ein stabiles System erhalten.

Beim Ausführungsbeispiel nach den Figuren 1 und 2 ist hierzu vorgesehen, dass die Motorwelle 4 durch eine zentrale Bohrung 11 im Träger 5 hindurchragt und die Anordnung des Läufers 1 auf der Motorwelle 4 mittels einer Nabe 7 erfolgt, die in axialer Richtung gesehen mit Abstand neben dem scheibenförmigen Träger 5 des Läufers 1 liegt. Die Verbindung zwischen dem Träger 5 und der Nabe 7 erfolgt dabei durch zwei einander diametral gegenüberliegende Rippen 8, die den Läufer 1 mit der Nabe 7 in axialer Richtung verbinden, wie dies aus Fig. 2 zu ersehen ist. Derart angeordnete Rippen sind hinsichtlich ihrer schwingungstechnischen Eigenschaften besonders günstig weich federnd zu dimensionieren. Da die Rippen 8 in radialer Richtung gesehen steif sind, ist keine weitere Lagerung des Läufers 1 erforderlich. Die Ausbildung dieser Rippen 8 hinsichtlich der Wahl ihres Materials und ihrer Abmessungen, insbesondere Querschnittsabmessungen in der Ebene, in der die beim federnden Nachgeben auftretenden Kräfte wirksam sind, erfolgt nach üblichen schwingungstechnischen Gesichtspunkten, dahingehend, dass sie inbezug auf die rotierende Antriebsbewegung elastisch nachgiebig sind und so eine Federung bewirken. Beispielsweise können die Rippen 8 als Kunststoffteile ausgebildet sein oder auch unmittelbar aus Blattfedern bestehen. Auf diese Weise ist erreicht, dass auf den Läufer 1 an sich übertragene Schwingungen durch die federnde Wirkung der Rippen 8 nicht oder nur in sehr stark herabgesetztem Masse auf die Nabe 7 und damit die Motorwelle 4 übertragen werden.

Beim vorliegenden Ausführungsbeispiel sind der Träger 5, die Rippen 8 und die Nabe 7 einstückig ausgebildet und aus Kunststoff hergestellt, wodurch sich die Serienfertigung eines solchen Läufers besonders günstig gestaltet. Zum einwandfreien Sitz der Nabe 7 auf der Motorwelle 4 ist in die Nabe 7 noch eine Metallbuchse 12 eingesetzt. Wie ersichtlich, ist somit der von der Motorwelle 4 freigesetellte Läufer 1 in bezug auf die rotierende Antriebsbewegung elastisch federnd an die Nabe 7 und damit auch an die Motorwelle 4 angekoppelt, wodurch erreicht ist, dass vom Läufer 1 her keine unerwünschten Schwingungen auf die Motorwelle 4 übertragen werden und so ein stabiler, gleichmässiger, ruhiger Lauf derselben gewährleistet ist.

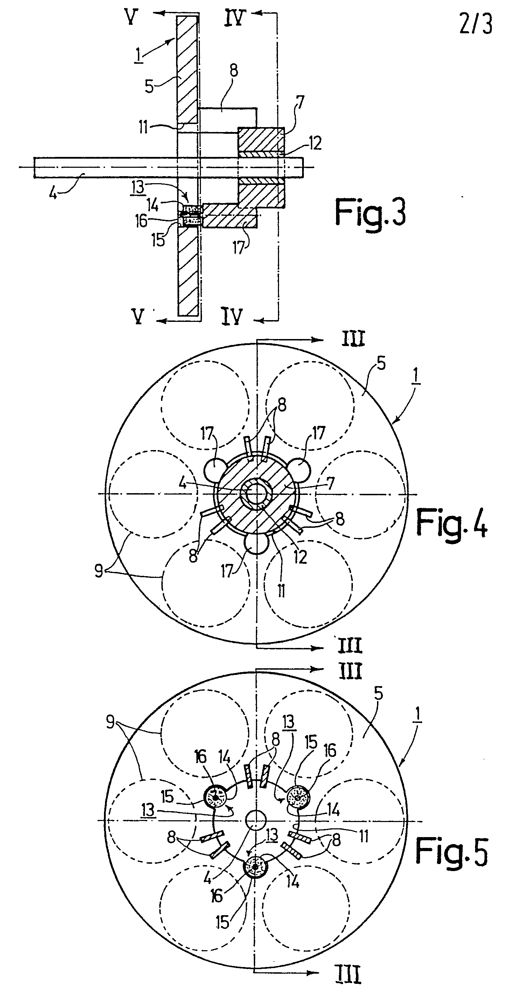

In den Figuren 3, 4 und 5 ist eine Abwandlung des Scheibenläufers 1 nach dem Ausführungsbeispiel der Figuren 1 und 2 dargestellt. Wie den Figuren 4 und 5 zu entnehmen ist, sind hier zur Verbindung des scheibenförmigen Trägers 5 des Läufers 1 mit der Nabe 7 sechs Rippen 8 vorgesehen, die wieder im wesentlichen radial und axial verlaufen und den Läufer 1 mit der in axialer Richtung mit Abstand neben im liegenden Naben 7 in axialer Richtung verbinden. Die Rippen 8 sind dabei zentralsymmetrisch angeordnet, wobei in Umfangsrichtung der Nabe 7 gesehen je zwei benachbarte Rippen zueinander geringeren Abstand haben als die anderen zueinander benachbarten Rippem, was dazu dient, um in den so gebildeten vergrösserten Zwischenräumen noch je einen von drei Schwingungsabsorbern 13 zusätzlich anordnen zu können. Jeder dieser Schwingungsabsorber, die in bekannter Weise eine Dämpfung bewirken, besteht aus einem hohlzylindrischen Gummipuffer 14, der einerseits in eine am Träger 5 vorgesehen zylinderförmige Ausnehmung 15 eingesetzt ist und in den andererseits ein Stift 16 hineinragt, der von je einem an der Nabe 7 vorgesehenen Ansatz 17 auskragt. Auf diese Weise bilden die Gummipuffer 14 elastische Verbindungselemente, die zwischen dem Träger 5 des Läufers 1 und der Nabe 7 wirksam sind, dies zusätzlich zu den Rippen 8, die ebenfalls elastische Verbindungselemente darstellen. In der Wirkungsweise sind diese beiden Arten von elastischen Verbindungselementen aber unterschiedlich, nämlich dahingehend, dass die Rippen 8 eine Federung in bezug auf die rotierende Antriebsbewegung bewirken, wogegen die Schwingungsabsorber eine Dämpfung hervorrufen. Erwähnt sei noch, dass in Fig. 5 der Deutlichkeit halber nur die elastischen Verbindungselemente, eine Rippe 8 und ein Schwingungsabsorber 13, dargestellt sind, die unmittelbar im Bereich der Schnittebene liegen, wogegen die anderen, weiter weg hinter der Schnittebene liegenden elastischen Verbindungselemente nicht eingezeichnet sind, deren Lage aber aus den Fig. 4 und 5 deutlich hervorgeht. Selbstverständlich könnte die Anordnung der Rippen und der Schwingungsabsorber auch noch in anderer Art und Weise erfolgen, ebenso wie ihre Anzahl anders gewählt sein könnte, was sich je nach den baulich und schwingungstechnisch erforderlichen Gegebenheiten richtet.

Durch die im vorstehenden beschriebenen kombinierte Anwendung von eine Federung bewirkende Rippen 8 und eine Dämpfung bewirkender Schwingungsabsorber 13 zur Kopplung des Läufers 1 mit der Nabe 7 und damit auch der Motorwelle 4 wird in besonders hohem Grade eine Übertragung von Schwingungen des Läufers auf die Motorwelle vermieden.

Die in Rede stehenden Massnahmen können vorteilhafterweise aber auch noch dazu herangezogen werden, um störende Einflüsse, die seitens der von der Motorwelle her angetriebenen Last als auch einer Regeleinrichtung für den Motor in das gesamte System eingebracht werden, herabzusetzen, so dass insgesamt gesehen ein sehr stabiles System erhalten wird.

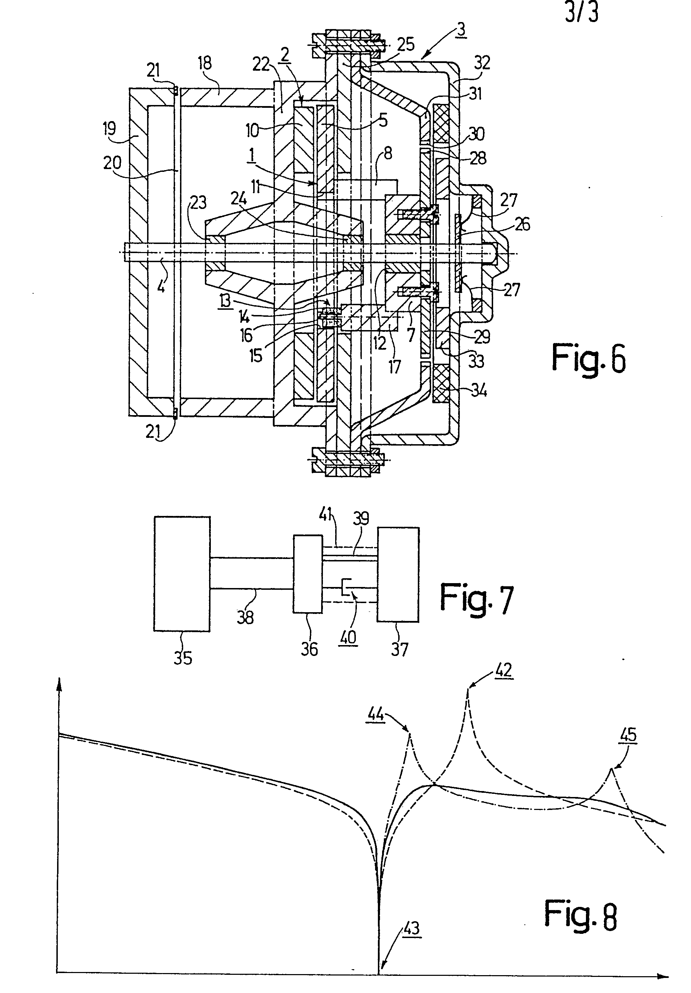

Fig. 6 zeigt ein Anwendungsbeispiel für einen Scheibenläufermotor unter Verwendung eines wie in den Fig. 3 bis 5 dargestellten Scheibenläufers. Es handelt sich hierbei um eine Abtasteinrichtung eines Aufzeichnungs- und/oder Wiedergabegerätes für einen bandförmigen Aufzeichnungsträger, auf dem mit rotierend angetriebenen Magnetköpfen schräg verlaufende Spuren abgetastet werden. In bekannter Weise besteht eine solche Abtasteinheit aus einem stillstehenden Trommelteil 18 und einem zu diesem koaxial angeordneten, rotierend antreibbaren Trommelteil 19. Zwischen diesen beiden Trommelteilen 18 und 19 ist ein Spalt 20 gebildet, in dem am Trommelteil 19 angeordnete Magnetköpfe 21 liegen, wobei sie geringfügig über die Mantelfläche der beiden Trommelteile 18, 19 hinausragen, so dass sie mit dem über die Mantelfläche der beiden Trommelteile 18, 19 schraubenlinienförmig hinweggeführten Aufzeichnungsträger in Wirkverbindung stehen. Da an die Koaxialität der beiden Trommelteile 18 und 19 und an die Gleichförmigkeit der Rotationsgeschwindigkeit des angetriebenen Trommelteiles 19 besonders hohe Anforderungen gestellt werden, sind zweckmässigerweise die beiden Trommelteile zusammen mit dem Antriebsmotor als eine Baueinheit ausgebildet. Demgemäss ist der stillstehende Trommelteil 18 an einem Gehäuseteil 22 des Scheibenläufermotors angeformt, wobei dieser Gehäuseteil 22 auch zwei Lager 23 und 24 für die Motorwelle 4 trägt, an deren freiem Ende der rotierend antreibbare Trommelteil 19 befestigt ist. Am Gehäuseteil 22 sitzt ferner der den Stator 2 bildende Magnetring 10, dem der Träger 5 des Scheibenläufers 1 gegenüber liegt, welcher seinerseits, wie beim Ausführungsbeispiel nach den Fig. 3 bis 5 beschrieben, über Rippen 8 und Schwingungsabsorber 13 an die auf der Motorwelle 4 sitzende Nabe 7 angekoppelt ist. Eine ringförmige Platte 25 bildet wieder einen magnetischen Rückschluss für die durch den Magnetring 10 erzeugten Magnetfelder. Über nicht gezeigte Leitungen werden die im Träger 5 sitzenden Spulen von einem Kollektor 26 her gespeist, der ebenfalls auf der Motorwelle 4 sitzt und dem seinerseits die zur Erregung der Spulen des Läufers 1 erforderlichen Signale über Schleifkontakte 27 zugeführt werden. Wegen der hier erforderlichen besonders hohen Gleichmässigkeit der Umfangsgeschwindigkeit des rotierend angetriebenen Trommelteiles 19 ist zur Gewinnung der den Spulen des Läufers zuzuführenden elektrischen Signale ein durch ein Servosystem gebildeter, hier nicht näher dargestellter Regelkreis vorgesehen, in den das Ausgangssignal eines Tachogenerators eingespeist wird, welcher von der Motorwelle 4 her angetrieben wird, wodurch sein Ausgangssignal ein Mass für die momentane Umfangsgeschwindigkeit der Motorwelle 4 ist. Da solche Servosysteme allgemein bekannt sind, erübrigt sich eine nähere Beschreibung derselben. Zur Bildung des Tachogenerators ist eine an ihrem Umfang mit einer Verzahnung 28 versehene Scheibe 29 vorgesehen, die an der Nabe 7 befestigt ist, wodurch sie als Läufer für den Tachogenerator wirksam ist. Der Verzahnung 28 dieser Scheibe 29 steht eine Verzahnung 30 eines gehäuseseitig angeordneten Ringes 31 gegenüber, der zusammen mit einem weiteren Gehäuseteil 32 für den magnetischen Rückschluss eines von einem Magnetring 33 ausgehenden, axial verlaufenden Magnetfeldes dient, welches auf diese Weise eine zwischen dem Ring 31 und dem Gehäuseteil 32 angeordnete ringförmige Spule 34 durchsetzt, die dann das Ausgangssignal des Tachogenerators liefert.

Bei einem solchen Antriebssystem bestehen die sich zusammen mit der Motorwelle 4 drehenden Teile aus dem Scheibenläufer 1, der Nabe 7, der den Läufer des Tachogenerators bildenden Scheibe 29 und des die eigentliche Last darstellenden Trommelteiles 19 sowie dem Kollektor 26, dessen Einfluss aber hier vernachlässigt werden kann. Jeder dieser Teile stellt für sich eine bestimmte Schwungmasse dar, wobei die Schwungmassen der Nabe 7 und der Scheibe 29 als eine Schwungmasse zu rechnen sind, da die Scheibe 29 unmittelbar auf der Nabe 7 befestigt ist. Diese gemeinsame Schwungmasse ist einerseits über die Motorwelle 4 mit der Schwungmasse des Trommelteiles 19 und andererseits
über die elastischen Verbindungselemente 8 und
13 mit der Schwungmasse des Scheibenläufers 1
gekoppelt, wodurch ein Schwingungssystem mit
ganz bestimmten Eigenschaften vorliegt. Für ein
solches Schwingungssystem kann ein mechanisches Schwingungsmodell angegeben werden,
wie dies Fig. 7 zeigt. Hierbei ist mit dem Rechteck
35 die Schwungmasse des Trommelteiles 19, mit
dem Rechteck 36 die gemeinsame Schwungmasse der Nabe 7 und der mit ihr verbundenen
Scheibe 29 und mit dem Rechteck 37 die
Schwungmasse des Scheibenläufers 1 angegeben. Das Rechteck 38 symbolisiert die Verkopplung der Nabe 7 und der Scheibe 29 über die Motorwelle 4 mit dem Trommelteil 19, das Rechteck
39 die federnde Verkopplung des Scheibenläufers
1 über die Rippen 8 und die Kolbendarstellung 40
die dämpfende Verkopplung des Scheibenläufers
1 über die Schwingungsabsorber 13 mit der Nabe
7 und der Scheibe 29. Die Dicke der Rechtecke 38
und 39 macht dabei den unterschiedlichen Grad
der federnden Verkopplungen deutlich, dahingehend, dass die Motorwelle 4 eine relativ starre
Kopplung bildet, wogegen die Rippen 8 eine
weich federnde Kopplung bewirken. Das
Schwingungsverhalten eines solchen Systems
kann in bekannter Weise durch Frequenzdiagramme beschrieben werden. Fig. 8 zeigt diesbezügliche Frequenzdiagramme, wobei auf der Abszisse in logarithmischem Massstab die Frequenz
und auf der Ordinate in logarithmischem Massstab der Quotient aus der Kreisfrequenz der
Schwungmasse 34, also des Trommelteiles 19,
und dem Drehmoment der Schwungmasse 37,
also des Scheibenläufers 1, aufgetragen ist. Ein
solches Frequenzgangdiagramm spiegelt bekanntlich den Zustand wieder, den das die Spulen
des Scheibenläufers 1 speisende Servosystem
vom gesamten Schwingungssystem sieht.

Um die Vorteile der erfindungsgemässen Massnahmen deutlich zu machen, sei vorerst angenommen, dass der Scheibenläufer 1, wie dies bei
bekannten Anordnungen üblich ist, starr mit der
Nabe 7 verbunden ist, also keine Rippen 8 bzw.
Schwingungsabsorber 13 zwischen diesen beiden Teilen vorgesehen sind, sondern eine starre
Verbindung. Eine solche starre Verbindung ist im
Schwingungsmodell nach Fig. 7 durch das zwischen den Schwungmassen 36 und 37 liegende
strichlierte Rechteck 41 angedeutet. Das diesbezügliche Frequenzdiagramm ist in Fig. 10 durch
eine strichlierte Linie angegeben. Wie ersichtlich,
weist ein solches Schwingungssystem eine durch
den Pfeil 42 gekennzeichnete ausgeprägte Resonanz auf, die sich aus dem Zusammenwirken einerseits der Summe der beiden Schwungmassen
36 und 37, also dem Scheibenläufer 1, der Nabe 7
und der mit ihr verbundenen Scheibe 29, und andererseits der Schwungmasse 35, also dem Trommelteil 19, ergibt. Eine solche Resonanz kann Instabilitäten im Schwingungssystem bewirken,
wobei noch zu berücksichtigen ist, dass in der
Praxis eine solche Resonanz vielfach in einem Frequenzbereich liegt, in den auch die Frequenz
fällt, mit der die wechselweise Umschaltung der
Erregung der Spulen des Scheibenläufers 1 erfolgt, wodurch sich besonders starke Störungen
im gesamten System ergeben können. Die weiters
noch im System vorhandene, durch den Pfeil 43
gekennzeichnete Gegenresonanz, die sich aus
dem Zusammenwirken der Schwungmasse 36,
also der Nabe 7 und der mit ihr verbundenen
Scheibe 29, mit der Schwungmasse 35, also dem
Trommelteil 19, ergibt, ist für das System nicht
störend, da wie aus dem gegen Null hin gehenden
Kurvenabschnitt ersichtlich ist, eine solche Frequenz über das Servosystem nicht angeregt werden kann.

Wird nun statt der starren Verbindung des
Scheibenläufers 1 mit der Nabe 7 mittels der Rippen 8, eine federnde Ankopplung des Scheibenläufers 1 an die Nabe 7 vorgesehen, also im
Schwingungsmodell nach Fig. 7 zwischen den
Schwungmassen 36 und 37, die durch das
schmale Rechteck 39 symbolisierte Kopplung
eingeführt, so ergibt sich für ein solches System
ein Frequenzgang, wie er in Fig. 8 durch die
strichpunktierte Linie angegeben ist. Wie ersichtlich, weist ein solches System zwei massgebliche
Resonanzen auf, die durch die Pfeile 44 und 45
gekennzeichnet sind. Die Resonanz 44 ergibt sich
dabei aus dem Zusammenwirken einerseits der
Schwungmasse 37, also des Scheibenläufers 1,
und andererseits der Summe der beiden
Schwungmassen 35 und 36, also des Trommelteiles 19, der Nabe 7 und der mit dieser verbundenen Scheibe 29. Die andere Resonanz 45 ergibt
sich aus dem Zusammenwirken einerseits der
Schwungmasse 37, also des Scheibenläufers 1,
und andererseits der Schwungmasse 36, also der
Nabe 7 mit der Scheibe 29. Wie ersichtlich, liegt
die nunmehrige Resonanz 44 frequenzmässig tiefer als die ursprüngliche Resonanz 42 und die Resonanz 45 in einem wesentlich höheren Frequenzbereich. Dies bedeutet aber, dass in dem
kritischen Frequenzbereich, in dem die ursprüngliche Resonanz 42 lag, keine Resonanz mehr vorhanden ist. Ausserdem ist ersichtlich, dass die Resonanzen 44 und 45 nicht mehr so stark ausgeprägt sind als die ursprüngliche Resonanz 42.
Beides schlägt sich in einer Verbesserung der Stabilität des Systems nieder und bewirkt einen
gleichmässig ruhigen Lauf des anzutreibenden
Trommelteiles 19.

Werden nun in einem solchen System zusätzlich zu den eine Federung bewirkenden Rippen 8
noch die eine Dämpfung bewirkenden Schwingungsabsorber 13 vorgesehen, demnach im
Schwingungsmodell nach Fig. 7 zwischen den
Schwungmassen 36 und 37 noch die durch den
Kolben 40 symbolisierte Dämpfung eingeführt, so
ergibt sich für ein solches System der in Fig. 8 mit
der vollen Linie dargestellte Frequenzgang. Wie
ersichtlich, wird durch die Einführung einer solchen Dämpfung erreicht, dass die Resonanzen
bedämpft werden, so dass ein solches System ein
ganz besonders gutes Stabilitätsverhalten aufweist. Ein derartiges Antriebssystem gewährleistet daher einen hinsichtlich der Umfangsgeschwindigkeit besonders gleichförmigen Lauf des vom Motor her anzutreibenden Teiles, was für viele Anwendungsfälle von entscheidender Bedeutung ist.

Wie aus dem Vorstehenden ersichtlich ist, gibt es eine Reihe von Abwandlungen der beschriebenen Ausführungsbeispiele, ohne dass dabei der Rahmen der Erfindung verlassen wird. Dies gilt insbesondere im Zusammenhang mit der Ausbildung und Anordnung der eine Federung bewirkenden Rippen, aber auch für die Anordnung und Ausbildung der Schwingungsabsorber, falls zusätzlich solche vorgesehen werden.

**Patentansprüche**

1. Elektromotor mit einem von der Motorwelle freigestellten Läufer, der mittels mindestens zweier im wesentlichen radial und axial verlaufender, elastischer Rippen mit mindestens einer auf der Motorwelle sitzenden Nabe verbunden ist, dadurch gekennzeichnet, dass die Nabe in axialer Richtung mit Abstand neben dem Läufer liegt und die Rippen den Läufer mit der Nabe, eine Federung bewirkend, in axialer Richtung verbinden.

2. Elektromotor nach Anspruch 1, dadurch gekennzeichnet, dass in Umfangsrichtung der Nabe gesehen mindestens zwischen zwei aufeinanderfolgenden Rippen zusätzlich mindestens ein parallel zu den Rippen verlaufender, ebenfalls den Läufer mit der Nabe verbindender Schwingungsabsorber angeordnet ist.

3. Elektromotor nach Anspruch 1 oder 2, dadurch gekennzeichnet, dass der Läufer einen Träger aufweist, wobei die Rippen den Träger mit der Nabe verbinden und der Träger, die Rippen und die Nabe einstückig, vorzugsweise aus Kunststoff, ausgebildet sind.

**Revendications**

1. Moteur électrique muni d'un rotor dégagé de l'arbre de moteur et réuni par au moins deux nervures élastiques s'étendant sensiblement dans des sens radial et axial à au moins un moyeu monté sur l'arbre de moteur, caractérisé en ce que, vu dans le sens axial, le moyeu est situé à côté du rotor tout en étant séparé par une certaine distance de celui-ci et en ce que les nervures réunissent le rotor au moyeu dans le sens axial tout en produisant un effet élastique.

2. Moteur électrique selon la revendication 1, caractérisé en ce que, vu dans le sens du pourtour du moyeu, au moins entre deux nervures successives, est encore disposé au moins un absorbeur de vibrations s'étendant parallèlement aux nervures et réunissant également le rotor au moyeu.

3. Moteur électrique selon la revendication 1 ou 2, caractérisé en ce que le rotor présente un support, alors que les nervures réunissent le support au moyeu et que le support, les nervures et le moyeu sont d'une seule pièce, de préférence en matière plastique.

**Claims**

1. An electric motor comprising a rotor which is isolated from the motor shaft and which is connected to at least one hub mounted on the motor shaft by means of at least two elastic ribs which extend substantially radially and axially, characterized in that the hub is arranged ajdacent and axially spaced from the rotor and the ribs connect the rotor to the hub in the axial direction so as to provide a resilient action.

2. An electric motor as claimed in Claim 1, characterized in that, viewed in the circumferential direction of the hub, in addition, at least one vibration absorber is arranged between two adjacent ribs, which vibration absorber extends parallel to the ribs and also connects the rotor to the hub.

3. An electric motor as claimed in Claim 1 or 2, characterized in that the rotor comprises a support, the ribs connecting the support to the hub, and the support, the ribs and the hub being formed in one piece, preferably from a plastics.

Fig.1

Fig. 2

Fig.3

Fig.4

Fig.5

Fig. 6

Fig. 7

Fig. 8